# EUROPEAN PATENT SPECIFICATION

(11) **EP 3 991 976 B1**
(45) Date of publication and mention of the grant of the patent: **06.12.2023**
(21) Application number: 21204702.1
(22) Date of filing: 26.10.2021
(51) Int. Cl.: B41J 3/407, G05B 19/18, B25J 11/00, B25J 9/16, G05B 19/4099

(54) **THREE-DIMENSIONAL OBJECT PRINTING APPARATUS AND THREE-DIMENSIONAL OBJECT PRINTING METHOD**
VORRICHTUNG ZUM DRUCKEN VON DREIDIMENSIONALEN OBJEKTEN UND VERFAHREN ZUM DRUCKEN VON DREIDIMENSIONALEN OBJEKTEN
APPAREIL ET PROCÉDÉ D'IMPRESSION D'OBJETS TRIDIMENSIONNELS

(30) Priority: 27.10.2020 JP 2020179514
(43) Date of publication of application: 04.05.2022
(73) Proprietor: Seiko Epson Corporation, Tokyo 160-8801 (JP)
(72) Inventor: MOCHIZUKI, Kenju, Suwa-shi, 392-8502 (JP); SUGAI, Keigo, Suwa-shi, 392-8502 (JP)
(74) Representative: Lewis Silkin LLP

(56) References cited:
- CN-U- 211 684 160
- DE-A1-102015 223 258
- JP-A- 2000 006 493
- JP-A- 2013 080 012
- JP-A- 2013 220 409
- JP-A- 2016 175 358
- US-A1- 2015 138 275
- US-A1- 2015 273 864
- US-B2- 9 744 776

## Description

The present application is based on, and claims priority from JP Application Serial Number 2020-179514, filed October 27, 2020.

### BACKGROUND

### 1. Technical Field

The present disclosure relates to a three-dimensional object printing apparatus and a three-dimensional object printing method.

### 2. Related Art

A three-dimensional object printing apparatus that executes printing on a surface of three-dimensional work using an inkjet method is known. For example, a system described in JP-T-2015-520011 includes a multi-axis robot constituted by a plurality of movable joint members, and a print head disposed on the robot, and ejects ink droplets from the print head onto a curved surface of a vehicle.

A device described in JP-T-2015-520011 operates all the plurality of movable joint members included in the robot during printing. Therefore, the device described in JP-T-2015-520011 has a problem that operational errors of the movable joint members overlap to cause a significant deviation of an actual movement route of the print head from an ideal movement route of the print head, thereby reducing the printing quality. US 2015/273864 A1 discloses an inkjet printing device for printing on balls wherein the holding unit is a 5 or 6 rotational axis robot.

### SUMMARY

To solve the foregoing problem, according to the invention, a three-dimensional object printing apparatus is described in claim 1.

According to still another aspect of the present invention, a three-dimensional object printing method is described in claim 7.

### BRIEF DESCRIPTION OF THE DRAWINGS

FIG. 1 is a schematic perspective view of a three-dimensional object printing apparatus according to a first embodiment.
FIG. 2 is a block diagram illustrating an electrical configuration of the three-dimensional object printing apparatus according to the first embodiment.
FIG. 3 is a perspective view of a schematic configuration of a liquid ejecting unit according to the first embodiment.
FIG. 4 is a flowchart of a procedure for a three-dimensional object printing method according to the first embodiment.
FIG. 5 a diagram describing a movement route of a liquid ejecting head for work according to the first embodiment.
FIG. 6 is a schematic diagram describing a printing operation.
FIG. 7 is a diagram illustrating a change over time in an operational amount of each of joint sections when the number of joint sections that are driven during the execution of the printing operation is 6.
FIG. 8 is a diagram illustrating a change over time in an operational amount of each of the joint sections when the number of joint sections that are driven during the execution of the printing operation is 3.
FIG. 9 is a graph illustrating the relationship between the position of the liquid ejecting head in a scan direction and a deviation from an ideal route.
FIG. 10 is a schematic top view of a three-dimensional object printing apparatus according to a second embodiment.
FIG. 11 is a block diagram illustrating an electrical configuration of the three-dimensional object printing apparatus according to the second embodiment.
FIG. 12 is a flowchart of a procedure for a three-dimensional object printing method according to the second embodiment.
FIG. 13 is a schematic diagram describing a first printing operation and a second printing operation.

### DESCRIPTION OF EXEMPLARY EMBODIMENTS

Hereinafter, embodiments of the present disclosure are described with reference to the accompanying drawings. Dimensions or scale of each of sections illustrated in the drawings may differ from actual dimensions or scale of each of the sections, and some sections are schematically illustrated in the drawings in order to easily understand the sections. The scope of the present disclosure is not limited to the embodiments unless otherwise stated in the following description to limit the present disclosure. The invention is desribed in the appended claims.

In the following description, an X axis, a Y axis, and a Z axis that intersect each other are used as appropriate. In addition, one direction in which the X axis extends is referred to as X1 direction, and the other direction in which the X axis extends is referred to as X2 direction. Similarly, one direction in which the Y axis extends is referred to as Y1 direction, and the other direction in which the Y axis extends is referred to as Y2 direction. Furthermore, one direction in which the Z axis extends is referred to as Z1 direction, and the other direction in which the Z axis extends is referred to as Z2 direction.

The X axis, the Y axis, and the Z axis are coordinate axes of a base coordinate system set in a space in which work W described later and a base 210 are placed. Typically, the Z axis is a vertical axis, and the Z2 direction corresponds to a downward direction in the vertical direction. The Z axis may not be the vertical direction. The X axis, the Y axis, and the Z axis are typically orthogonal to each other, but are not limited thereto. The X axis, the Y axis, and the Z axis may not be orthogonal to each other. For example, the X axis, the Y axis, and the Z axis may intersect each other at an angle ranging from 80° to 100°.

### 1. First Embodiment

### 1-1. Overview of Three-Dimensional Object Printing Apparatus

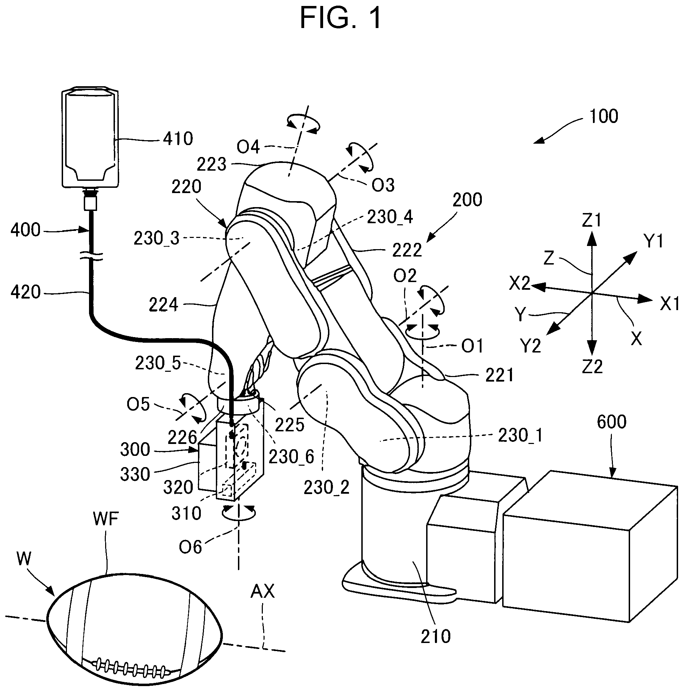

FIG. 1 is a schematic perspective view of a three-dimensional object printing apparatus 100 according to a first embodiment. The three-dimensional object printing apparatus 100 executes printing on a surface of three-dimensional work W using an inkjet method.

The work W has a surface WF targeted for printing. In an example illustrated in FIG. 1, the work W is a rugby ball having a long spherical shape around the long axis AX of the rugby ball. The surface WF is a curved surface having a non-constant curvature. In the first embodiment, the work W is placed in such a manner that the long axis AX is parallel to the X axis. The work W is not limited to the rugby ball. The shape, size, and the like of the work W are not limited to the example illustrated in FIG. 1 and are arbitrary. For example, the surface of the work W may be a flat surface, a stepped surface, an uneven surface, or the like. The orientation of the work W placed is not limited to the example illustrated in FIG. 1 and is arbitrary.

In the example illustrated in FIG. 1, the three-dimensional object printing apparatus 100 is an ink jet printer that uses a vertical articulated robot. Specifically, as illustrated in FIG. 1, the three-dimensional object printing apparatus 100 includes a robot 200, a liquid ejecting unit 300, a liquid supply unit 400, and a controller 600. First, the units of the three-dimensional object printing apparatus 100 are briefly described below.

The robot 200 is a moving mechanism that changes the position and orientation of the liquid ejecting unit 300 with respect to the work W. In the example illustrated in FIG. 1, the robot 200 is a so-called 6-axis vertical articulated robot. The robot 200 includes the base 210 and an arm 220.

The base 210 holds the arm 220. In the example illustrated in FIG. 1, the base 210 is fixed to a placement surface by screwing or the like. The placement surface is a floor surface facing toward the Z1 direction, or the like. The placement surface to which the base 210 is fixed may face toward any direction and is not limited to the example illustrated in FIG. 1. For example, the placement surface may be a wall or a ceiling or may be a surface of a movable wagon or the like.

The arm 220 is a 6-axis robot arm having a proximal end attached to the base 210 and a distal end whose three-dimensional position and orientation are changed with respect to the proximal end. The arm 220 includes arms 221, 222, 223, 224, 225, and 226 coupled in this order.

The arm 221 is coupled to the base 210 via a joint section 230_1 and rotatable around a rotational axis O1. The arm 222 is coupled to the arm 221 via a joint section 230_2 and rotatable around a rotational axis O2. The arm 223 is coupled to the arm 222 via a joint section 230_3 and rotatable around a rotational axis O3. The arm 224 is coupled to the arm 223 via a joint section 230_4 and rotatable around a rotational axis O4. The arm 225 is coupled to the arm 224 via a joint section 230_5 and rotatable around a rotational axis O5. The arm 226 is coupled to the arm 225 via a joint section 230_6 and rotatable around a rotational axis O6. Each of the joint sections 230_1 to 230_6 is hereinafter referred to as joint section 230 in some cases.

Each of the joint sections 230_1 to 230_6 is an example of a "joint". In the example illustrated in FIG. 1, the number N of joint sections is 6. The joint section 230_1 is an example of a "second joint". The rotational axis O1 is an example of a "second rotational axis". The joint section 230_2 is an example of a "first joint". The rotational axis O2 is an example of a "first rotational axis". The joint section 230_3 is an example of a "fourth joint". The rotational axis O3 is an example of a "fourth rotational axis". The joint section 230_5 is an example of a "third joint". The rotational axis O5 is an example of a "third rotational axis".

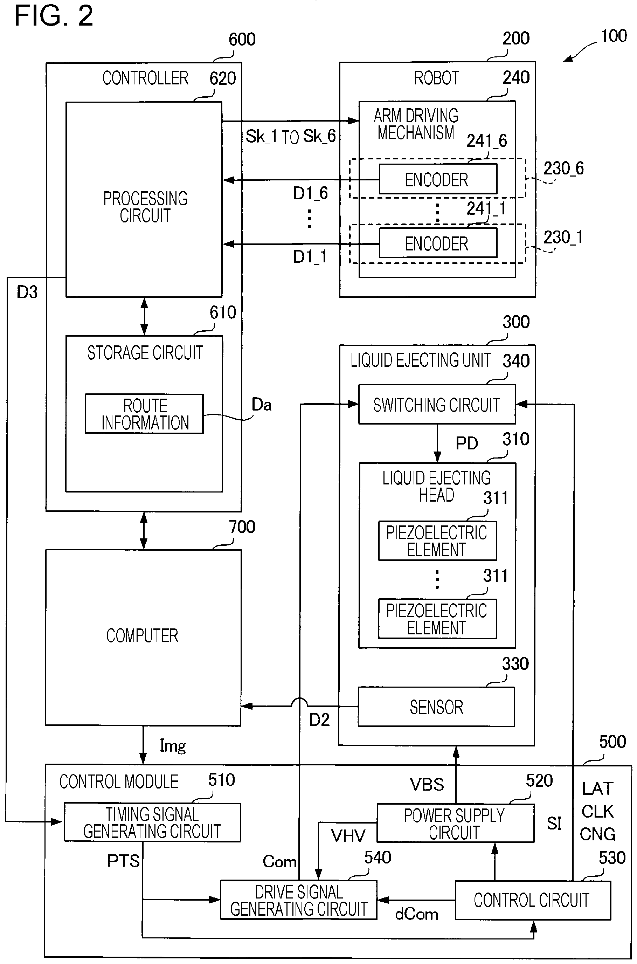

Each of the joint sections 230_1 to 230_6 is a mechanism that couples one of two adjacent arms to the other arm in such a manner that the one arm is rotatable with respect to the other arm. Although not illustrated in FIG. 1, a driving mechanism that rotates one of two adjacent arms with respect to the other arm is provided at each of the joint sections 230_1 to 230_6. Each of the driving mechanisms includes a motor that generates driving force for the rotation, a reducer that reduces a rotational speed of the motor and transmits the driving force, and an encoder that detects an operational amount such as a rotational angle and is a rotary encoder or the like. An aggregate of the driving mechanisms corresponds to an arm driving mechanism 240 illustrated in FIG. 2 and described later. The encoders correspond to encoders 241 illustrated in FIG. 2 and the like and described later.

The rotational axis O1 is perpendicular to the placement surface to which the base 210 is fixed. The placement surface is not illustrated in FIG. 1. The rotational axis O2 is perpendicular to the rotational axis O1. The rotational axis O3 is parallel to the rotational axis O2. The rotational axis O4 is perpendicular to the rotational axis O3. The rotational axis O5 is perpendicular to the rotational axis O4. The rotational axis O6 is perpendicular to the rotational axis O5.

Regarding the rotational axes, the term "perpendicular" not only indicates that an angle formed by two rotational axes is 90° but also indicates that an angle formed by two rotational axes is in a range of 90° ± 5°. Similarly, the term "parallel" not only indicates that two rotational axes are completely parallel to each other but also indicates that one of two rotational axes is inclined by an angle of approximately ± 5° with respect to the other rotational axis.

The liquid ejecting unit 300 is attached as an end effector to the distal end of the arm 220, that is, to the arm 226.

The liquid ejecting unit 300 is a device that includes a liquid ejecting head 310 that ejects ink toward the work W. The ink is an example of a liquid. In the first embodiment, the liquid ejecting unit 300 includes not only the liquid ejecting head 310 but also a pressure control valve 320 and a sensor 330. The pressure control valve 320 adjusts the pressure of ink to be supplied to the liquid ejecting head 310. The sensor 330 measures a distance from the liquid ejecting unit 300 to the work W. Since the liquid ejecting head 310, the pressure control valve 320, and the sensor 330 are fixed to the arm 226, relationships of the positions and orientation of the liquid ejecting head 310, the pressure control valve 320, and the sensor 330 are fixed.

The ink is not particularly limited. Examples of the ink are water-based ink in which a color material such as a dye or a pigment is dissolved in a water-based solvent, curable ink containing a curable resin such as an ultraviolet-curable resin, and solvent-based ink in which a color material such as a dye or a pigment is dissolved in an organic solvent. The ink is not limited to the solutions and may be ink in which a color material or the like is dispersed as a dispersoid in a dispersion medium. The ink is not limited to ink containing a color material and may be ink containing, as a dispersoid, conductive particles such as metal particles for forming a wiring or the like.

Although not illustrated in Fig. 1, the liquid ejecting head 310 includes piezoelectric elements, cavities for storing ink, and nozzles communicating with the cavities. Each of the piezoelectric elements is provided for a respective one of the cavities and changes pressure within the cavity to eject ink from the nozzle corresponding to the cavity. The liquid ejecting head 310 is obtained by bonding a plurality of substrates such as silicon substrates appropriately processed by etching or the like to each other via an adhesive or the like. The piezoelectric elements correspond to piezoelectric elements 311 illustrated in FIG. 2 and described later. Instead of the piezoelectric elements, a heater that heats ink within the cavities may be used as a driving element for ejecting ink from the nozzles.

**The** pressure control valve 320 is a valve mechanism that is opened and closed based on the pressure of ink within the liquid ejecting head 310. By opening and closing the pressure control valve 320, the pressure of the ink within the liquid ejecting head 310 is maintained in a predetermined negative pressure range. Therefore, ink menisci formed in the nozzles N of the liquid ejecting head 310 are stabilized. This prevents air bubbles from being inserted into the nozzles N and prevents ink from spilling out of the nozzles N.

The sensor 330 is an optical displacement sensor that measures the distance from the liquid ejecting head 310 to the work W. The sensor 330 is provided when necessary and may be omitted. In the example illustrated in FIG. 1, the liquid ejecting unit 300 includes the one liquid ejecting head 310 and the one pressure control valve 320. The number of liquid ejecting heads 310 included in the liquid ejecting unit 300 and the number of pressure control valves 320 included in the liquid ejecting unit 300 are not limited to the example illustrated in FIG. 1 and may be two or more. An attachment position of the pressure control valve 320 is not limited to the arm 226. For example, the pressure control valve 320 may be attached to another one of the arms or may be present at a fixed position with respect to the base 210.

The liquid supply unit 400 is a mechanism for supplying ink to the liquid ejecting head 310. The liquid supply unit 400 includes a liquid container 410 and a supply flow path 420.

The liquid container 410 stores ink. The liquid container 410 is, for example, a bagshaped ink pack formed of a flexible film.

In the example illustrated in FIG. 1, the liquid container 410 is fixed to a wall, a ceiling, a column, or the like and positioned in the Z1 direction with respect to the liquid ejecting head 310. That is, the liquid container 410 is positioned on the upper side with respect to a movement region of the liquid ejecting head 310 in the vertical direction. Therefore, ink can be supplied at predetermined pressure from the liquid container 410 to the liquid ejecting head 310 without using a mechanism such as a pump.

The liquid container 410 may be present at any position as long as ink can be supplied at predetermined pressure from the liquid container 410 to the liquid ejecting head 310. The liquid container 410 may be present on the lower side with respect to the liquid ejecting head 310 in the vertical direction. In this case, for example, a pump may be used to supply ink at predetermined pressure from the liquid container 410 to the liquid ejecting head 310.

The supply flow path 420 is a flow path through which ink is supplied from the liquid container 410 to the liquid ejecting head 310. The pressure control valve 320 is provided in the middle of the supply flow path 420. Therefore, even when a positional relationship between the liquid ejecting head 310 and the liquid container 410 is changed, it is possible to reduce a variation in the pressure of the ink within the liquid ejecting head 310.

The supply flow path 420 is constituted by an inner space of a tube, for example. The tube used for the supply flow path 420 is made of an elastic material such as a rubber material or an elastomer material and has flexibility. By constituting the supply flow path 420 using the tube having flexibility, a change in a relative positional relationship between the liquid container 410 and the pressure control valve 320 is allowed. Therefore, even when the position or orientation of the liquid ejecting head 310 is changed in a state in which the position and orientation of the liquid container 410 is fixed, it is possible to supply ink from the liquid container 410 to the pressure control valve 320.

A part of the supply flow path 420 may be constituted by a non-flexible member. A part of the supply flow path 420 may have a distribution flow path for distributing ink to a plurality of sections. A part of the supply flow path 420 may be integrated with the liquid ejecting head 310 or the pressure control valve 320.

The controller 600 is a robot controller that controls driving of the robot 200. Although not illustrated in FIG. 1, a control module that controls an ejection operation of the liquid ejecting unit 300 is electrically coupled to the controller 600. A computer is coupled to and able to communicate with the controller 600 and the control module. The control module corresponds to a control module 500 illustrated in FIG. 2 and described later. The computer corresponds to a computer 700 illustrated in FIG. 2 and described later.

### 1-2. Electrical Configuration of Three-Dimensional Object Printing Apparatus

FIG. 2 is a block diagram illustrating an electrical configuration of the three-dimensional object printing apparatus 100 according to the first embodiment. FIG. 2 illustrates electrical constituent components among constituent components of the three-dimensional object printing apparatus 100. FIG. 2 illustrates the arm driving mechanism 240 that includes the encoders 241_1 to 241_6. The arm driving mechanism 240 is the aggregate of the foregoing driving mechanisms that operate the joint sections 230_1 to 230_6. The encoders 241_1 to 241_6 are provided corresponding to the joint sections 230_1 to 230_6 and measure operational amounts such as rotational angles of the joint sections 230_1 to 230_6. Each of the encoders 240_1 to 240_6 is hereinafter referred to as encoder 241 in some cases.

As illustrated in FIG. 2, the three-dimensional object printing apparatus 100 includes the robot 200, the liquid ejecting unit 300, the controller 600, the control module 500, and the computer 700. Each of the electrical constituent components described later may be divided as appropriate. A portion of each of the electrical constituent components described later may be included in another one of the constituent elements or may be integrated with another one of the constituent elements. For example, some or all of functions of the control module 500 or some or all of functions of the controller 600 may be enabled by the computer 700 coupled to the controller 600 or may be enabled by another external device such as a personal computer (PC) coupled to the controller 600 via a network such as a local area network (LAN) or the Internet.

The controller 600 has a function of controlling driving of the robot 200 and a function of generating a signal D3 to synchronize the ejection operation of the liquid ejecting head 310 with an operation of the robot 200. The controller 600 includes a storage circuit 610 and a processing circuit 620.

The storage circuit 610 stores various programs to be executed by the processing circuit 620 and various data to be processed by the processing circuit 620. For example, the storage circuit 610 includes either one or both of semiconductor memories that are a volatile memory such as a random-access memory (RAM) and a nonvolatile memory such as a read-only memory (ROM), an electrically erasable programmable read-only memory (EEPROM), or a programmable ROM (PROM). A portion of the storage circuit 610 or the entire storage circuit 610 may be included in the processing circuit 620.

Route information Da is stored in the storage circuit 610. The route information Da indicates a route along which the liquid ejecting head 310 needs to move. Specifically, the route information Da includes information indicating a route along which a tool center point indicating the origin of a tool coordinate system needs to move. For example, the route information Da is represented using coordinate values of the base coordinate system. The route information Da is determined based on work information indicating the position and shape of the work W. The work information is obtained by associating information such as computeraided design (CAD) data indicating the three-dimensional shape of the work W with the foregoing base coordinate system. The route information Da is input to the storage circuit 610 from the computer 700.

The processing circuit 620 controls operations of the joint sections 230_1 to 230_6 based on the route information Da and generates the signal D3. Specifically, the processing circuit 620 executes inverse kinematics calculation to convert the route information Da into operational amounts such as rotational angles and rotational speeds of the joint sections 230_1 to 230_6. The processing circuit 620 outputs control signals Sk_1 to Sk_6 based on output D1_1 to D1_6 from the encoders 241_1 to 241_6 included in the arm driving mechanism 240 of the robot 200 in such a manner that the operational amounts such as the actual rotational angles and rotational speeds of the joint sections 230_1 to 230_6 are the results of the foregoing calculation. The control signals Sk_1 to Sk_6 correspond to the joint sections 230_1 to 230_6 and control driving of the motors included in the corresponding joint sections 230. The output D1_1 to D1_6 corresponds to the encoders 241_1 to 241_6. Each of the output D1_1, the output D1_2, the output D1_3, the output D1_4, the output D1_5, and the output D1_6 is hereinafter referred to as output D1 in some cases.

The processing circuit 620 generates the signal D3 based on the output D1 from at least one of the encoders 241_1 to 241_6. For example, the processing circuit 620 generates, as the signal D3, a trigger signal including a pulse when the output D1 from one encoder 241 among the encoders 241_1 to 241_6 is a predetermined value.

The processing circuit 620 includes a processor such as one or more central processing units (CPUs), for example. The processing circuit 620 may include a programmable logic device such as a field-programmable gate array (FPGA) instead of or as well as the one or more CPUs.

The control module 500 is a circuit that controls the ejection operation of the liquid ejecting head 310 based on the signal D3 output from the controller 600 and print data from the computer 700. The control module 500 includes a timing signal generating circuit 510, a power supply circuit 520, a control circuit 530, and a drive signal generating circuit 540.

The timing signal generating circuit 510 generates a timing signal PTS based on the signal D3. The timing signal generating circuit 510 is constituted by a timer that starts generating the timing signal PTS upon detecting the signal D3 as a trigger.

The power supply circuit 520 receives power supplied from a commercial power supply not illustrated to generate predetermined various potentials. Each of the generated various potentials is appropriately supplied to each of the components of the three-dimensional object printing apparatus 100. For example, the power supply circuit 520 generates a power supply potential VHV and an offset potential VBS. The offset potential VBS is supplied to the liquid ejecting unit 300. The power supply potential VHV is supplied to the drive signal generating circuit 540.

The control circuit 530 generates a control signal SI, a waveform specifying signal dCom, a latch signal LAT, a clock signal CLK, and a change signal CNG based on the timing signal PTS. The signals synchronize with the timing signal PTS. Among the signals, the waveform specifying signal dCom is input to the drive signal generating circuit 540 and the other signals are input to the liquid ejecting unit 300 and a switching circuit 340.

The control signal SI is a digital signal to specify operational states of the piezoelectric elements 311 included in the liquid ejecting head 310. Specifically, the control signal SI specifies whether a drive signal Com described later is to be supplied to the piezoelectric elements 311. For example, the control signal SI specifies whether ink is to be ejected from the nozzles corresponding to the piezoelectric elements 311, and specifies amounts of ink to be ejected from the nozzles. The waveform specifying signal dCom is a digital signal to define the waveform of the drive signal Com. The latch signal LAT and the change signal CNG are used together with the control signal SI and define the timing of driving the piezoelectric elements 311, thereby defining the timing of ejecting ink from the nozzles. The clock signal CLK synchronizes with the timing signal PTS and serves as a reference. Among the foregoing signals, signals to be input to the switching circuit 340 of the liquid ejecting unit 300 are described later in detail.

The control circuit 530 includes a processor such as one or more central processing units (CPUs), for example. The control circuit 530 may include a programmable logic device such as a field-programmable gate array (FPGA) instead of or as well as the one or more CPUs.

The drive signal generating circuit 540 generates the drive signal Com to drive each of the piezoelectric elements 311 included in the liquid ejecting head 310. Specifically, the drive signal generating circuit 540 includes a DA conversion circuit and an amplifying circuit, for example. In the drive signal generating circuit 540, the DA conversion circuit converts the waveform specifying signal dCOM from the control circuit 530 from a digital signal to an analog signal and the amplifying circuit uses the power supply potential VHV from the power supply circuit 520 to amplify the analog signal, thereby generating the drive signal Com. A waveform signal that is included in a waveform included in the drive signal Com and is to be supplied to the piezoelectric elements 311 is a drive pulse PD. The drive pulse PD is supplied to the piezoelectric elements 311 from the drive signal generating circuit 540 via the switching circuit 340. The switching circuit 340 switches, based on the control signal SI, whether at least a part of the waveform included in the drive signal Com is supplied as the drive pulse PD.

The computer 700 has a function of supplying information such as the route information Da to the controller 600 and a function of supplying information such as print data to the control module 500. The computer 700 according to the first embodiment is electrically coupled to the foregoing sensor 330 and supplies information for correction of the router information Da to the controller 600 based on a signal D2 from the sensor 330.

### 1-3. Liquid Ejecting Unit

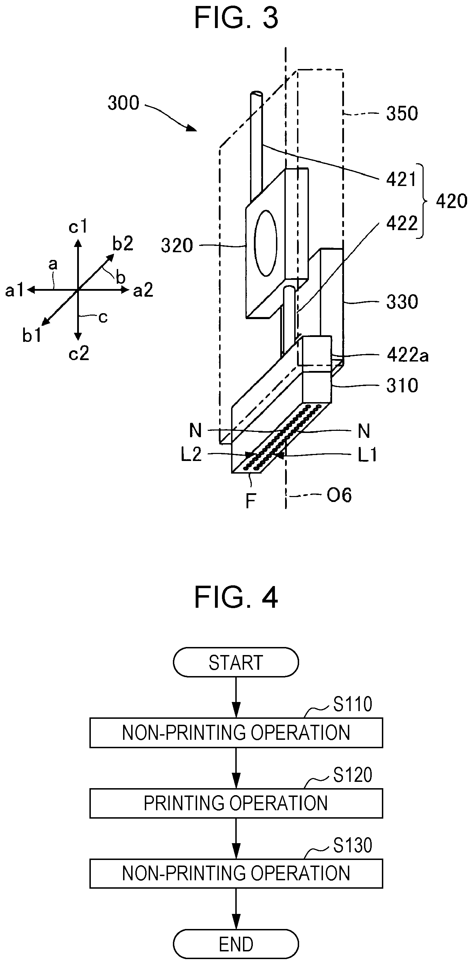

FIG. 3 is a perspective view illustrating a schematic configuration of the liquid ejecting unit 300 according to the first embodiment.

The following description is given using an a axis, a b axis, and a c axis that intersect each other as appropriate. One direction in which the a axis extends is referred to as a1 direction, and the other direction in which the a axis extends and that extends toward the opposite direction to the a1 direction is referred to as a2 direction. Similarly, one direction in which the b axis extends is referred to as b1 direction, and the other direction in which the b axis extends and that extends toward the opposite direction to the b1 direction is referred to as b2 direction. In addition, one direction in which the c axis extends is referred to as c1 direction, and the other direction in which the c axis extends and that extends toward the opposite direction to the c1 direction is referred to as c2 direction.

The a, b, and c axes are coordinate axes of the tool coordinate system set in the liquid ejecting unit 300. Relationships of relative positions and orientation of the a, b, and c axes with respect to the foregoing X, Y, and Z axes change due to an operation of the foregoing robot 200. In the example illustrated in FIG. 3, the c axis is parallel to the rotational axis O6. The a, b, and c axes are typically orthogonal to each other, but are not limited thereto. For example, the a, b, and c axes may intersect each other at an angle ranging from 80° to 100°, for example.

As described above, the liquid ejecting unit 300 includes the liquid ejecting head 310, the pressure control valve 320, and the sensor 330. The liquid ejecting head 310, the pressure control valve 320, and the sensor 330 are held by a holding body 350 indicated by a dashed-and-double-dotted line in FIG. 3.

The holding body 350 is, for example, made of a metal material or the like and is a substantially rigid body. Although the holding body 350 is formed in a flat box shape in FIG. 3, the shape of the holding body 350 is not particularly limited and is arbitrary.

The holding body 350 is attached to the distal end of the arm 220, that is, to the arm 226. Therefore, each of the liquid ejecting head 310, the pressure control valve 320, and the sensor 330 is fixed to the arm 226.

In the example illustrated in FIG. 3, the pressure control valve 320 is positioned in the c1 direction with respect to the liquid ejecting head 310, and the sensor 330 is positioned in the a2 direction with respect to the liquid ejecting head 310.

The supply flow path 420 is sectioned by the pressure control valve 320 into an upstream flow path 421 and a downstream flow path 422. That is, the supply flow path 420 includes the upstream flow path 421 coupling the liquid container 410 to the pressure control valve 320, and the downstream flow path 422 coupling the pressure control valve 320 to the liquid ejecting head 310. In the example illustrated in FIG. 3, a portion of the downstream flow path 422 of the supply flow path 420 is constituted by a flow path member 422a. The flow path member 422a includes a flow path for distributing ink from the pressure control valve 320 to a plurality of sections of the liquid ejecting head 310. The flow path member 422a is a stacked body of a plurality of substrates made of, for example, a resin material, and each of the substrates has a groove or a hole for a flow path of ink.

The liquid ejecting head 310 has a nozzle surface F and the plurality of nozzles N opened on the nozzle surface F. In the example illustrated in FIG. 3, a normal to the nozzle surface F is the c2 direction, and the plurality of nozzles N are grouped into a first nozzle array La and a second nozzle array Lb that are arranged side by side with a gap in the direction along the a axis. Each of the first nozzle array La and the second nozzle array Lb is a group of a plurality of nozzles N linearly arrayed in the direction along the b axis. Components included in the liquid ejecting head 310 and relating to the nozzles N of the first nozzle array La are arranged substantially symmetrical to components included in the liquid ejecting head 310 and relating to the nozzles N of the second nozzle array Lb with respect to the direction along the a axis.

The positions of the nozzles N of the first nozzle array La may match the positions of the nozzles N of the second nozzle array Lb in the direction along the b axis or may be different from the positions of the nozzles N of the first nozzle array Lb in the direction along the b axis. In addition, components relating to nozzles N of one of the first and second nozzle arrays La and Lb may be omitted. The configuration in which the positions of the nozzles N of the first nozzle array La match the positions of the nozzles N of the second nozzle array Lb in the direction along the b axis is exemplified below.

### 1-4. Operation of Three-Dimensional Object Printing Apparatus and Three-dimensional Object Printing Method

FIG. 4 is a flowchart of a procedure for a three-dimensional object printing method according to the first embodiment. The three-dimensional object printing method is performed using the foregoing three-dimensional object printing apparatus 100. As illustrated in FIG. 4, the three-dimensional object printing apparatus 100 executes step S110 of executing a non-printing operation, step S120 of executing a printing operation, and step S130 of executing a non-printing operation in this order.

The non-printing operation of step S110 is an operation that causes the robot 200 to change the relative position of the liquid ejecting head 310 with respect to the work W before the printing operation. In the non-printing operation of step S110, the liquid ejecting head 310 does not eject ink. The non-printing operation of step S110 includes a preparation operation such as an operation that causes the robot 200 to move the liquid ejecting head 310 to a printing start position and sets the rotational axis O2, the rotational axis O3, and the rotational axis O5 to be parallel to each other, for example. In the non-printing operation of step S110, all the six joint sections 230 included in the robot 200 can be operated and the liquid ejecting head 310 is moved by operations of a larger number of joint sections 230 than the number of joint sections 230 that are rotated in the printing operation.

The printing operation of step S120 is an operation that causes the liquid ejecting head 310 to eject ink while causing the robot 200 to change the relative position of the liquid ejecting head 310 with respect to the work W. In the printing operation, the liquid ejecting head 310 is moved by operations of a smaller number of joint sections 230 than the number of joint sections 230 that are rotated in each of the non-printing operations. Therefore, as compared with the non-printing operations, a deviation of an actual movement route of the liquid ejecting head 310 from an ideal route of the liquid ejecting head 310 is reduced. In the printing operation according to the first embodiment, the liquid ejecting head 310 is moved by operations of three of the six joint sections 230 included in the robot 200. The printing operation is described later in detail.

The non-printing operation of step S130 is an operation that causes the robot 200 to change the relative position of the liquid ejecting head 310 with respect to the work W after the printing operation. In the non-printing operation of step S130, the liquid ejecting head 310 does not eject ink. The non-printing operation of step S130 includes an operation such as an operation that causes the robot 200 to move the liquid ejecting head 310 from a printing end position to another position, for example. In the non-printing operation of step S130, all the six joint sections 230 included in the robot 200 can be operated and the liquid ejecting head 310 is moved by operations of a larger number of joint sections 230 than the number of joint sections 230 that are rotated in the printing operation.

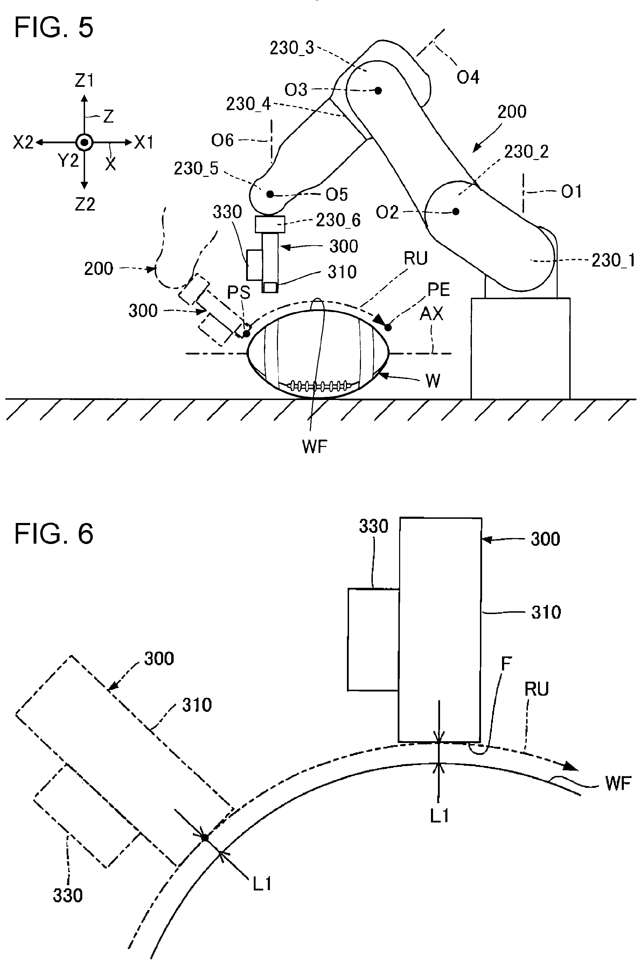

FIG. 5 is a diagram describing a movement route RU of the liquid ejecting head 310 for the work W according to the first embodiment. FIG. 5 exemplifies the case where printing is executed on the surface WF of the work W placed in such a manner that the long axis AX is parallel to the X axis. The work W is positioned in the X2 direction with respect to the robot 200.

As illustrated in FIG. 5, in the printing operation, the robot 200 moves the liquid ejecting head 310 along the movement route RU. The movement route RU extends along the surface WF from a position PS to a position PE. The movement route RU linearly extends along the X axis when viewed in the Z2 direction.

In the printing operation, the robot 200 rotates three of the six joint sections 230. In the example illustrated in FIG. 5, the robot 200 sets the rotational axes of the joint sections 230_2, 230_3, and 230_5 to be parallel to the Y axis and rotates the joint sections 230_2, 230_3, and 230_5 during the execution of the printing operation. Therefore, the liquid ejecting head 310 can be moved along the movement route RU by the operations of the three joint sections 230.

During the execution of the printing operation, the robot 200 rotates three of the six joint sections 230 in such a manner that the b axis of the tool coordinate system set in the liquid ejecting unit 300 is kept parallel to the Y axis of the base coordinate system. Specifically, during the execution of the printing operation, the robot 200 keeps the first and second nozzle arrays La and Lb parallel to the rotational axes of the three rotated joint sections 230. That is, during the execution of the printing operation, the robot 200 does not rotate the joint sections 230_1, 230_4, and 230_6 whose rotational axes are not parallel to the Y axis.

Although the printing operation according to the first embodiment sets the rotational axes O2, O3, and O5 to be parallel to each other, the printing operation is not limited thereto. For example, the printing operation may set the rotational axes O2, O3, and O6 to be parallel to each other. In this case, the liquid ejecting head 310 is moved along the movement route RU by operations of the joint sections 230_2, 230_3, and 230_6. In this case, a direction in which the liquid ejecting unit 300 is fixed to the arm 226 needs to be different from the direction indicated in the example of FIG. 5. For example, since the liquid ejecting unit 300 is fixed to the arm 226 in such a manner that the b axis along which the nozzle arrays extend is parallel to the rotational axis O6, the printing operation can be executed on the work W while the liquid ejecting head 310 is moved along the movement route RU.

FIG. 6 is a schematic diagram describing the printing operation. FIG. 6 schematically illustrates the state of the liquid ejecting head 310 on a part of the movement route RU. In FIG. 6, the liquid ejecting head 310 at predetermined time before time indicated by a solid line is indicated by a dashed-and-double-dotted line. As illustrated in FIG. 6, in the printing operation, a distance L1 from the liquid ejecting head 310 to the surface WF is maintained in a predetermined range. In the printing operation, the liquid ejecting head 310 in a fixed orientation state faces the surface WF. In the example illustrated in FIG. 6, the nozzle surface F faces the surface WF in such a manner that the nozzle surface F is parallel to the surface WF. During the execution of the printing operation, the nozzle surface F may be inclined about the Y axis with respect to the surface WF, and the inclination angle of the nozzle surface F may be changed.

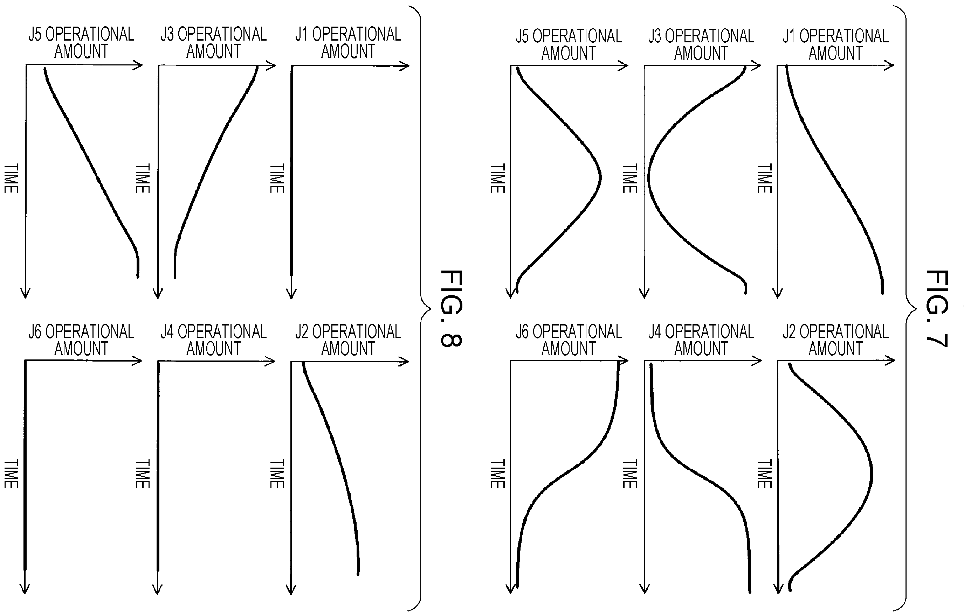

FIG. 7 is a diagram illustrating a change over time in an operational amount of each of the joint sections 230 when the number of joint sections 230 that are driven during the execution of the printing operation is 6. FIG. 8 is a diagram a change over time in an operational amount of each of the joint sections 230 when the number of joint sections 230 that are driven during the execution of the printing operation is 3. In FIGs. 7 and 8, "J1 operational amount" indicates a rotational amount of the joint section 230_1. Similarly, in FIGs. 7 and 8, "J2 to J6 operational amounts" indicate rotational amounts of the joint sections 230_2 to 230_6, respectively.

In the first embodiment, as illustrated in FIG. 8, the robot 200 rotates the three joint sections 230_2, 230_3, and 230_5 during the execution of the printing operation. On the other hand, the robot 200 does not rotate the three joint sections 230_1, 230_4, and 230_6 during the execution of the printing operation. The operational amounts illustrated in FIGs. 7 and 8 are an example and are not limited thereto.

FIG. 8 illustrates the rotational amounts of the joint sections 230 when the work W is placed in the same manner as FIG. 5. FIG. 7 illustrates the rotational amounts of the joint sections 230 when the work W is placed in a different manner from FIG. 5. For example, when the work W is placed in such a manner that the long axis AX is parallel to the Y axis, and the movement route RU is set to linearly extend along the Y axis when viewed in the Z2 direction, rotational amounts of the joint sections 230 are such rotational amounts as illustrated in FIG. 7.

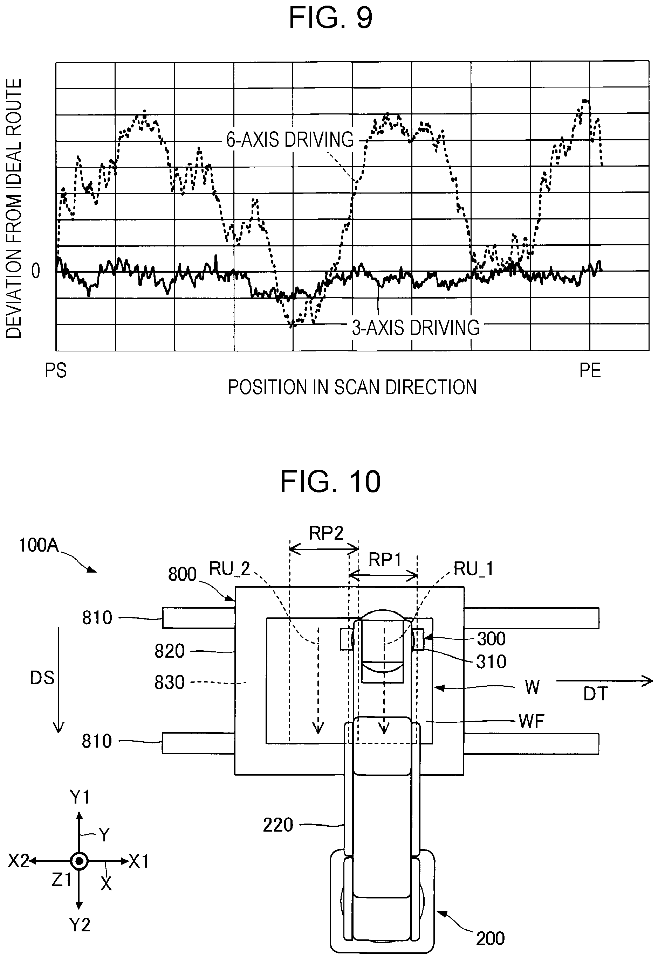

FIG. 9 is a graph illustrating the relationship between the position of the liquid ejecting head 310 in the scan direction and a deviation from an ideal route. In FIG. 9, the "position in the scan direction" that is indicated by the horizontal axis is the position of the liquid ejecting head 310 in the direction along the X axis, and the "deviation from the ideal route" that indicated by the vertical axis is the position of the liquid ejecting head 310 in the direction along the Y axis. That is, the "deviation from the ideal route" indicates an unintended movement of the liquid ejecting head 310 when the liquid ejecting head 310 moves along the movement route RU. When a value on the vertical axis in FIG. 9 is 0, the liquid ejecting head 310 is positioned on the ideal route.

As indicated by a solid line in FIG. 9, when three joint sections 230 are rotated, a deviation of an actual movement route of the liquid ejecting head 310 from the ideal route is reduced, as compared with the case where the six joint sections 230 are rotated as indicated by a broken line in FIG. 9.

As described above, the three-dimensional object printing apparatus 100 includes the liquid ejecting head 310 and the robot 200 that is an example of a "moving mechanism". The liquid ejecting head 310 ejects ink onto the three-dimensional work W. The ink is an example of a "liquid". The robot 200 changes the relative position of the liquid ejecting head 310 with respect to the work W. The robot 200 includes the joint sections 230 that are an example of a number N (N is a natural number of 2 or greater) of joint sections rotatable around different rotational axes. In the first embodiment, N is 6. As described above, the robot 200 includes the plurality of joint sections 230.

In the three-dimensional object printing apparatus 100, when the liquid ejecting head 310 executes the printing operation that causes the liquid ejecting head 310 to eject ink while causing the robot 200 to change the relative position of the liquid ejecting head 310 with respect to the work W, the number of joint sections 230 that rotate during the execution of the printing operation among the number N of joint sections 230 is M (M is a natural number smaller than N). Since the number of joint sections 230 that rotate during the execution of the printing operation is M smaller than N, an effect of an operational error of the joint sections 230 is reduced and a deviation of the actual movement route of the liquid ejecting head 310 from the ideal movement route of the liquid ejecting head 310 can be reduced, as compared with a configuration in which the number of joint sections 230 that rotate during the execution of the printing operation is N. As a result, the printing quality can be improved.

On the other hand, in the three-dimensional object printing apparatus 100, when the liquid ejecting head 310 executes a non-printing operation that causes the robot 200 to change the relative position of the liquid ejecting head 310 with respect to the work W and does not cause the liquid ejecting head 310 to eject ink, the number of joint sections that rotate during the execution of the non-printing operation among the number N of joint sections is larger than M and equal to or smaller than N. In the first embodiment, the plurality of joint sections 230 included in the robot 200 includes the joint section 230_2 that is an example of the "first joint" that rotates during the execution of the printing operation and the non-printing operation, and the joint section 230_1 that is an example of the "second joint" that does not rotate during the execution of the printing operation and rotates during the execution of the non-printing operation.

Since the number of joint sections 230 that rotate during the execution of the non-printing operation is larger than M, a degree of freedom of an operation of the robot 200 during the non-printing operation increases, as compared with a configuration in which the number of joint sections 230 that rotate during the execution of the non-printing operation is M. Therefore, the usability and the like during the non-printing operation can be improved, as compared with the case where the number of joint sections 230 is M.

In the first embodiment, as described above, the number N of joint sections 230 include the joint section 230_2 that is an example of the "first joint", the joint section 230_1 that is an example of the "second joint", and the joint section 230_5 that is an example of the "third joint". The joint section 230_2 rotates around the rotational axis O2 that is an example of the "first rotational axis". The joint section 230_1 rotates around the rotational axis O1 that is an example of the "second rotational axis". The joint section 230_5 rotates around the rotational axis O5 that is an example of the "third rotational axis".

In the three-dimensional object printing apparatus 100, during the execution of the printing operation, each of the joint sections 230_2 and 230_5 rotates and the joint section 230_1 does not rotate. At the start time of the printing operation, an angle formed by the rotational axis O2 and the rotational axis O5 is smaller than an angle formed by the rotational axis O2 and the rotational axis O1. In the first embodiment, the rotational axis O2 and the rotational axis O5 are parallel to each other and the angle formed by the rotational axis O2 and the rotational axis O5 is 0°. In the first embodiment, the rotational axis O2 and the rotational axis O1 are orthogonal to each other and the angle formed by the rotational axis O2 and the rotational axis O1 is 90°.

As described above, the rotational axis O1 forms the largest angle with the rotational axis O2 among angles formed by the rotational axes of the number N of joint sections 230 and the rotational axis O2. The "largest angle formed with the rotational axis O2" indicates that the angle is the closest to 90°.

In addition, as described above, the rotational axis O2 and the rotational axis O5 are parallel to each other. Therefore, by operating the joint section 230_2 and the joint section 230_5, the liquid ejecting head 310 can be linearly moved when viewed in a direction perpendicular to the rotational axis O2 or the rotational axis O5. Specifically, the robot 200 can move the liquid ejecting head 310 in a direction parallel to a virtual plane formed by the X axis and the Z axis.

As described above, the number N of joint sections 230 include the joint section 230_3 that is an example of the "fourth joint". The joint section 230_3 rotates around the rotational axis O3 that is an example of the "fourth rotational axis". In the three-dimensional object printing apparatus 100, the rotational axes O2, O3, and O5 are parallel to each other at the start time of the printing operation, and the joint sections 230_2, 230_5, and 230_3 rotate during the execution of the printing operation. Therefore, while the distance from the liquid ejecting head 310 to the surface of the work W is maintained in a desirable range, the liquid ejecting head 310 can be linearly moved when viewed in a direction perpendicular to the rotational axis O2 or the rotational axis O5 by operating the joint sections 230_2, 230_5, and 230_3, regardless of the shape of the work W.

As described above, the liquid ejecting head 310 includes the plurality of nozzles N arranged along the b axis that is an example of a "nozzle array axis". In the three-dimensional object printing apparatus 100, the rotational axis O2 and the b axis are parallel to each other during the execution of the printing operation. Therefore, by rotating the joint section 230_2 around the rotational axis O2 and moving the liquid ejecting head 310 in a direction orthogonal to the rotational axis O2, printing can be executed across the width of the plurality of nozzles N arranged along the b axis.

### 2. Second Embodiment

A second embodiment of the present disclosure is described below. In the second embodiment exemplified below, the reference signs used to describe the first embodiment are used for components whose effects and functions are the same as or similar to those in the first embodiment, and a detailed description of each of the components is omitted as appropriate.

FIG. 10 is a schematic top view of a three-dimensional object printing apparatus 100A according to the second embodiment. The three-dimensional object printing apparatus 100A includes a movable section 800, and other sections of the three-dimensional object printing apparatus 100A are the same as or similar to those of the three-dimensional object printing apparatus 100 according to the first embodiment. Work W described in the second embodiment is a rectangular parallelepiped and has a surface WF whose normal is parallel to the Z1 direction.

The movable section 800 is a mechanism that operates independently of an operation of the robot 200 to relatively move the liquid ejecting head 310 with respect to the work W. In the example illustrated in FIG. 10, the movable section 800 is a linear moving mechanism that moves the work W in the direction along the X axis. Specifically, the movable section 800 includes a pair of rails 810, a table 820, and a driving mechanism 830. The rails 810 are members arranged parallel to each other and extending in the direction along the X axis. The table 820 is attached to the pair of rails 810 via a linear movement bearing or the like and is movable along the X axis. The driving mechanism 830 is a linear moving motor or the like and relatively moves the table 820 with respect to the pair of rails 810 along the X axis. Although not illustrated, an encoder is disposed in the driving mechanism 830. The encoder detects the position of the table 820 with respect to the pair of rails 810 in the direction along the X axis.

The movable section 800 with the foregoing configuration moves the work W from a first state in which the liquid ejecting head 310 faces a first region RP1 of the surface WF of the work W to a second state in which the liquid ejecting head 310 faces a second region RP2 of the surface WF of the work W. The second region RP2 is different from the first region RP1. In the first state, a first printing operation that causes the liquid ejecting head 310 to eject ink toward the first region RP1 while causing the robot 200 to move the liquid ejecting head 310 along a first movement route RU_1 is executed. In the second state, a second printing operation that causes the liquid ejecting head 310 to eject ink toward the second region RP2 while causing the robot 200 to move the liquid ejecting head 310 along a second movement route RU_2 is executed.

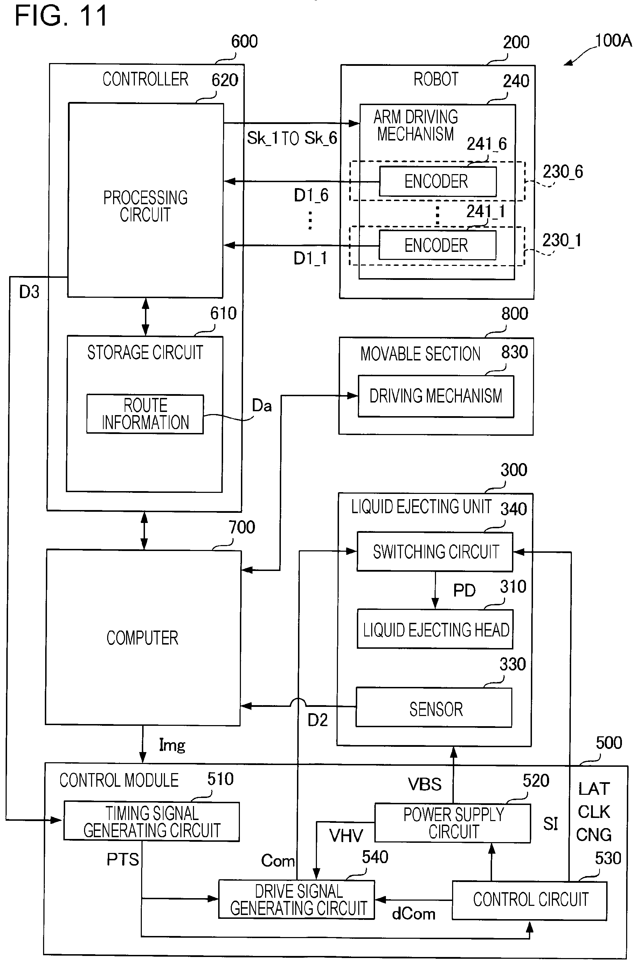

FIG. 11 is a block diagram illustrating an electrical configuration of the three-dimensional object printing apparatus 100A according to the second embodiment. As illustrated in FIG. 11, the movable section 800 is electrically coupled to the computer 700. The computer 700 moves the work W in a time period between the first printing operation and the second printing operation.

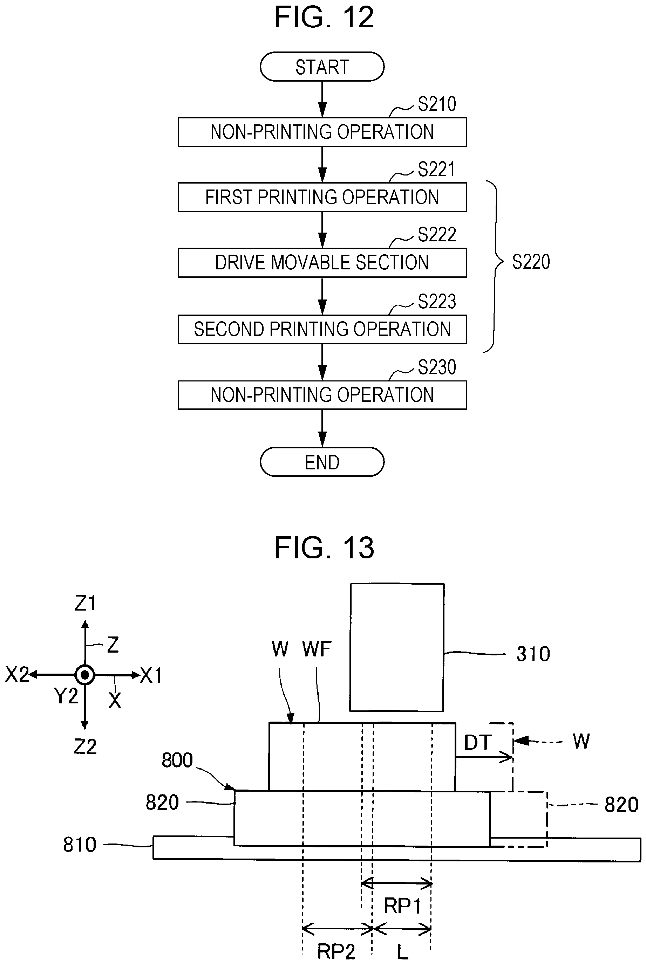

FIG. 12 is a flowchart of a procedure for a three-dimensional object printing method according to the second embodiment. The three-dimensional object printing method is performed using the foregoing three-dimensional object printing apparatus 100A. As illustrated in FIG. 12, the three-dimensional object printing apparatus 100A executes step S210 of executing a non-printing operation, step S220 of executing a printing operation, and step S230 of executing a non-printing operation in this order.

The non-printing operation of step S210 is an operation that causes the robot 200 to change the relative position of the liquid ejecting head 310 with respect to the work W before the printing operation. In the non-printing operation of step S210, the liquid ejecting head 310 does not eject ink. The non-printing operation of step S210 includes a preparation operation such as an operation that causes the robot 200 to move the liquid ejecting head 310 to a printing start position of the first printing operation and sets the rotational axes O2, O3, and O5 to be parallel to each other. In the non-printing operation of step S210, all the six joint sections 230 included in the robot 200 can be operated and the liquid ejecting head 310 is moved by operations of a larger number of joint sections 230 than the number of joint sections 230 that are rotated in the printing operation.

The printing operation of step S220 is an operation that causes the liquid ejecting head 310 to eject ink while causing the robot 200 to change the relative position of the liquid ejecting head 310 with respect to the work W. The printing operation executes step S221 of executing the first printing operation, step S222 of driving the movable section 800, and step S223 of executing the second printing operation in this order. In each of the first printing operation and the second printing operation, the liquid ejecting head 310 is moved by operations of three of the six joint sections 230 of the robot 200 in the same manner as the printing operation described in the first embodiment. Therefore, as compared with the non-printing operations, a deviation of an actual movement route of the liquid ejecting head 310 from an ideal movement route of the liquid ejecting head 310 is reduced. Step S222 is described later with reference to FIG. 13.

The non-printing operation of step S230 is an operation that causes the robot 200 to change the relative position of the liquid ejecting head 310 with respect to the work W after the printing operation. In the non-printing operation of step S230, the liquid ejecting head 310 does not eject ink. The non-printing operation of step S230 includes an operation such as an operation that causes the robot 200 to move the liquid ejecting head 310 from a printing end position of the second printing operation to a different position from the printing end position. In the non-printing operation of step S230, all the six joint sections 230 of the robot 230 can be moved and the liquid ejecting head 310 is moved by operations of a larger number of joint sections 230 than the number of joint sections 230 that are rotated in the printing operation. An example of the different position is a position where a maintenance unit (not illustrated) that maintains the liquid ejecting head 310 is disposed.

FIG. 13 is a schematic diagram describing the first printing operation and the second printing operation. FIG. 13 illustrates the movable section 800 and the liquid ejecting head 310 during the execution of the first printing operation. The movable section 800 moves the work W from a position indicated by a solid line to a position indicated by a dashed-and-double-dotted line in the direction DT along the X axis in a time period between the first printing operation and the second printing operation. A distance L that the work W is moved is determined based on a positional relationship between the first region RP1 and the second region RP2. In the example illustrated in FIG. 13, a part of the first region RP1 and a part of the second region RP2 overlap each other. Therefore, the distance L is shorter by a length of the overlapping part than a width of the first region RP1 or a width of the second region RP2 in the direction along the X axis. The first region RP1 and the second region RP2 may not overlap each other.

Also in the second embodiment, the printing quality can be improved, like the first embodiment. In the second embodiment, as described above, the printing operation that is executed in step S220 includes the first printing operation that is executed in step S221 and the second printing operation that is executed in step S223. The first printing operation executes printing on the first region RP1 of the work W while rotating a number M of joint sections 230. The second printing operation executes printing on the second region RP2 different from the first region RP1 of the work W while rotating a number M of joint sections 230. The second region RP2 is different from the first region RP1. The robot 200 includes the movable section 800. In a time period between the first printing operation and the second printing operation, the movable section 800 changes the relative position of the liquid ejecting head 310 with respect to the work W to move the liquid ejecting head 310 toward a certain direction different from a direction toward which the liquid ejecting head 310 is moved during the execution of the first and second printing operations. In the second embodiment, the certain direction is the X1 direction. Since the movable section 800 relatively moves the liquid ejecting head 310 with respect to the work W without depending on the plurality of joint sections 230, printing can be executed on each of the first region RP1 and the second region RP2 without changing operations of the plurality of joint sections 230.

In the second embodiment, the configuration in which the positional relationship between the movable section 800 and the base 210 of the robot 200 is fixed is exemplified. However, the second embodiment is not limited thereto. For example, when a movable section constituted by a linear actuator is disposed between the liquid ejecting head 310 and the distal end of the arm 220 of the robot 200, the same effects as those obtained in the second embodiment can be obtained.

### 3. Modifications

The embodiments exemplified above may be variously modified. Specific modifications that may be applied to each of the embodiments described above are exemplified below. Two or more aspects arbitrarily selected from the following examples may be combined in such a manner that the aspects do not contradict each other.

### 3-1. Modification 1

In the foregoing embodiments, the configuration in which three joint sections 230 are rotated during the execution of the printing operation is exemplified. However, the embodiments are not limited thereto. It is sufficient if the number of joint sections 230 that rotate during the execution of each of the printing operations is smaller than the number of joint sections 230 that rotate during the execution of each of the non-printing operations. However, since the shape of the work W is not limited, it is preferable that three joint sections 230 whose rotational axes are parallel to each other be rotated, as described in the embodiments. The rotational axes of the three joint sections 230 are not limited to be orthogonal to the Z axis and may be arbitrary.

### 3-2. Modification 2

In the foregoing embodiments, the configuration in which the 6-axis vertical articulated robot is used as the moving mechanism. However, the embodiments are not limited thereto. It is sufficient if the moving mechanism can three-dimensionally change the relative position and orientation of the liquid ejecting head with respect to the work. Therefore, the moving mechanism may be a vertical articulated robot other than a 6-axis vertical articulated robot or may be a horizontal articulated robot. In addition, the robot arm may include an extending and contracting mechanism or the like as well as the joint sections constituting a rotating mechanism. However, from the perspective of balance between the print qualities of the printing operations and the degree of freedom of an operation of the moving mechanism in the non-printing operations, the moving mechanism is preferably a 6- or more-axis articulated robot.

### 3-3. Modification 3

In the foregoing embodiments, the configuration in which screwing or the like is used to fix the liquid ejecting head to the distal end of the robot arm is exemplified. However, the embodiments are not limited to the configuration. For example, the liquid ejecting head may be fixed to the distal end of the robot arm by being gripped by a gripping mechanism such as a hand attached to the distal end of the robot arm.

### 3-4. Modification 4

In the foregoing embodiments, the moving mechanism configured to move the liquid ejecting head is exemplified. However, the embodiments are not limited thereto. For example, the position of the liquid ejecting head may be fixed and the moving mechanism may be configured to move the work and three-dimensionally change the relative position and orientation of the work with respect to the liquid ejecting head. In this case, for example, the work is gripped by a gripping mechanism such as a hand attached to the distal end of the robot arm.

### 3-5. Modification 5

In the foregoing embodiments, the configuration of executing printing using one type of ink is exemplified. However, the embodiments are not limited to this configuration. A configuration of executing printing using two or more types of ink is applicable to the present disclosure.

### 3-6. Modification 6

The use of the three-dimensional object printing apparatus according to the present disclosure is not limited to printing. For example, the three-dimensional object printing apparatus may eject a solution containing a coloring matter and may be used as a producing apparatus that forms a color filter of a liquid crystal display device. In addition, the three-dimensional object printing apparatus may eject a solution containing a conductive matter and may be used as a producing apparatus that forms a wiring and an electrode on a wiring substrate. Furthermore, the three-dimensional object printing apparatus may be used as a jet dispenser that applies a liquid such as an adhesive to work.

## Claims

1. A three-dimensional object printing apparatus comprising:
a liquid ejecting head (310) comprising a plurality of nozzles (N), and configured to eject a liquid to three-dimensional work (W); and
a moving mechanism (200) that is configured to change a relative position of the liquid ejecting head (310) with respect to the work (W), wherein
the moving mechanism (200) includes a number N of joints (230) rotatable around different rotational axes, N being a natural number of two or greater,
wherein three-dimensional object printing apparatus further comprises a controller (600) programmed to execute a printing operation that causes the liquid ejecting head (310) to eject a liquid while causing the moving mechanism (200) to change the relative position of the liquid ejecting head (310) with respect to the work (W), the number of joints (230) that rotate during the execution of the printing operation among the number N of joints is M that is a natural number smaller than N;
wherein
the number N of joints includes:
a first joint (230_2) that is configured to rotate around a first rotational axis (O2),
a second joint (230_1) that is configured to rotate around a second rotational axis (O1), and
a third joint (230_5) that is configured to rotate around a third rotational axis (O5), and, during the execution of the printing operation, the first joint (230_2) and the third joint (230_5) rotate and the second joint (230_1) does not rotate, and
an angle formed by the first rotational axis (O2) and the third rotational axis (O5) is smaller than an angle formed by the first rotational axis (O2) and the second rotational axis (O1) at start time of the printing operation.

2. The three-dimensional object printing apparatus according to claim 1, wherein
the controller (700) is further programmed to execute a non-printing operation that causes the moving mechanism (200) to change the relative position of the liquid ejecting head (310) with respect to the work (W) and does not cause the liquid ejecting head (310) to eject a liquid, the number of joints (230) that rotate during the execution of the non-printing operation among the number N of joints is larger than M and equal to or smaller than N.

3. The three-dimensional object printing apparatus according to claim 1, wherein
the second rotational axis (O1) forms the largest angle with the first rotational axis (O1) among angles formed by the first rotational axis (O2) and rotational axes of the number N of joints.

4. The three-dimensional object printing apparatus according to claim 1, wherein
the first rotational axis (O2) is parallel to the third rotational axis (O5).

5. The three-dimensional object printing apparatus according to any claim 1, wherein
the number N of joints further includes a fourth joint (230_3) that is configured to rotate around a fourth rotational axis (O3),
the first rotational axis (O2) is parallel to the third rotational axis (O5) and the fourth rotational axis (O3) at the start time of the printing operation, and
the first joint (230_2), the third joint (230_5), and the fourth joint (230_3) rotate during the execution of the printing operation.

6. The three-dimensional object printing apparatus according to claim 1 or claim 2, wherein
the liquid ejecting head (310) includes the plurality of nozzles (N) arranged along a nozzle array axis (b), and
the first rotational axis (O2) is parallel to the nozzle array axis (b) during the execution of the printing operation.

7. A three-dimensional object printing method of executing printing on three-dimensional work (W) using a liquid ejecting head (310) that comprises a plurality of nozzles (N), and ejects a liquid to the work (W) and a moving mechanism (200) that changes a relative position of the liquid ejecting head (310) with respect to the work (W), wherein
the moving mechanism (200) includes a number N of joints (230) rotatable around different rotational axes, N being a natural number of 2 or greater, and
when a printing operation, that causes the liquid ejecting head (310) to eject a liquid while causing the moving mechanism (200) to change the relative position of the liquid ejecting head (310) with respect to the work (W), is executed, the number of joints (230) that rotate during the execution of the printing operation among the number N of joints is M that is a natural number smaller than N; and
wherein
the number N of joints includes:
a first joint (230_2) that rotates around a first rotational axis (O2),
a second joint (230_1) that rotates around a second rotational axis (O1), and
a third joint (230_5) that rotates around a third rotational axis (O5), and, during the execution of the printing operation, the first joint (230_2) and the third joint (230_5) rotate and the second joint (230_1) does not rotate, and
an angle formed by the first rotational axis (O2) and the third rotational axis (O5) is smaller than an angle formed by the first rotational axis (O2) and the second rotational axis (O1) at start time of the printing operation.

## Patentansprüche

1. Vorrichtung zum Drucken dreidimensionaler Objekte, umfassend:
einen Flüssigkeitsausstoßkopf (310), der mehrere Düsen (N) umfasst und eingerichtet ist, eine Flüssigkeit auf ein dreidimensionales Werkstück (W) auszustoßen; und
einen Bewegungsmechanismus (200), der eingerichtet ist, eine relative Position des Flüssigkeitsausstoßkopfs (310) in Bezug auf das Werkstück (W) zu ändern, wobei
der Bewegungsmechanismus (200) eine Anzahl N von Verbindungen (230) enthält, die um verschiedene Drehachsen drehbar sind, wobei N eine natürliche Zahl von Zwei oder größer ist,
wobei die Vorrichtung zum Drucken dreidimensionaler Objekte weiter eine Steuereinheit (600) umfasst, die programmiert ist, einen Druckbetrieb auszuführen, der den Flüssigkeitsausstoßkopf (310) veranlasst, eine Flüssigkeit auszustoßen, während er den Bewegungsmechanismus (200) veranlasst, die relative Position des Flüssigkeitsausstoßkopfs (310) in Bezug auf das Werkstück (W) zu ändern, wobei die Anzahl von Verbindungen (230), die während der Ausführung des Druckbetriebs von der Anzahl N von Verbindungen dreht, M ist, das eine natürliche Zahl kleiner als N ist;
wobei
die Anzahl N von Verbindungen enthält:
eine erste Verbindung (230_2), die eingerichtet ist, um eine erste Drehachse (O2) zu drehen,
eine zweite Verbindung (230_1), die eingerichtet ist, um eine zweite Drehachse (01) zu drehen, und
eine dritte Verbindung (230_5), die eingerichtet ist, um eine dritte Drehachse (O5) zu drehen,
und, während der Ausführung des Druckbetriebs, die erste Verbindung (230_2) und die dritte Verbindung (230_5) drehen und die zweite Verbindung (230_1) nicht dreht und
zum Startzeitpunkt des Druckbetriebs ein Winkel, der durch die erste Drehachse (O2) und die dritte Drehachse (O5) gebildet wird, kleiner ist als ein Winkel, der durch die erste Drehachse (O2) und die zweite Drehachse (01) gebildet wird.

2. Vorrichtung zum Drucken dreidimensionaler Objekte nach Anspruch 1, wobei
die Steuereinheit (700) weiter programmiert ist, einen Nicht-Druckbetrieb auszuführen, der den Bewegungsmechanismus (200) veranlasst, die relative Position des Flüssigkeitsausstoßkopfs (310) in Bezug auf das Werkstück (W) zu ändern, und den Flüssigkeitsausstoßkopf (310) nicht veranlasst, eine Flüssigkeit auszustoßen, wobei die Anzahl von Verbindungen (230), die während der Ausführung des Nicht-Druckbetriebs dreht, aus der Anzahl N von Verbindungen größer als M und gleich oder kleiner als N ist.

3. Vorrichtung zum Drucken dreidimensionaler Objekte nach Anspruch 1, wobei
die zweite Drehachse (01) den größten Winkel mit der ersten Drehachse (O1) aus Winkeln bildet, die durch die erste Drehachse (O2) und Drehachsen der Anzahl N von Verbindungen gebildet werden.

4. Vorrichtung zum Drucken dreidimensionaler Objekte nach Anspruch 1, wobei
die erste Drehachse (O2) parallel zu der dritten Drehachse (O5) ist.

5. Vorrichtung zum Drucken dreidimensionaler Objekte nach Anspruch 1, wobei
die Anzahl N von Verbindungen weiter eine vierte Verbindung (230_3) enthält, die eingerichtet ist, um eine vierte Drehachse (O3) zu drehen,
die erste Drehachse (O2) zum Startzeitpunkt des Druckbetriebs parallel zu der dritten Drehachse (O5) und der vierten Drehachse (O3) ist und
die erste Verbindung (230_2), die dritte Verbindung (230_5) und die vierte Verbindung (230_3) während der Ausführung des Druckbetriebs drehen.

6. Vorrichtung zum Drucken dreidimensionaler Objekte nach Anspruch 1 oder Anspruch 2, wobei
der Flüssigkeitsausstoßkopf (310) die mehreren Düsen (N) enthält, die entlang einer Düsenanordnungsachse (b) angeordnet sind, und
die erste Drehachse (O2) während der Ausführung des Druckbetriebs parallel zu der Düsenanordnungsachse (b) ist.

7. Verfahren zum Drucken dreidimensionaler Objekte zum Ausführen eines Drucks auf einem dreidimensionalen Werkstück (W) unter Verwendung eines Flüssigkeitsausstoßkopfs (310), der mehrere Düsen (N) umfasst und eine Flüssigkeit auf das Werkstück (W) ausstößt, und eines Bewegungsmechanismus (200), der eine relative Position des Flüssigkeitsausstoßkopfs (310) in Bezug auf das Werkstück (W) ändert, wobei
der Bewegungsmechanismus (200) eine Anzahl N von Verbindungen (230) enthält, die um verschiedene Drehachsen drehbar sind, wobei N eine natürliche Zahl von 2 oder größer ist,
wenn ein Druckbetrieb ausgeführt wird, der den Flüssigkeitsausstoßkopf (310) veranlasst, eine Flüssigkeit auszustoßen, während er den Bewegungsmechanismus (200) veranlasst, die relative Position des Flüssigkeitsausstoßkopfs (310) in Bezug auf das Werkstück (W) zu ändern, die Anzahl von Verbindungen (230), die während der Ausführung des Druckbetriebs von der Anzahl N von Verbindungen dreht, M ist, das eine natürliche Zahl kleiner als N ist; und
wobei
die Anzahl N von Verbindungen enthält:
eine erste Verbindung (230_2), die um eine erste Drehachse (O2) dreht,
eine zweite Verbindung (230_1), die um eine zweite Drehachse (01) dreht, und
eine dritte Verbindung (230_5), die um eine dritte Drehachse (O5) dreht,
und, während der Ausführung des Druckbetriebs, die erste Verbindung (230_2) und die dritte Verbindung (230_5) drehen und die zweite Verbindung (230_1) nicht dreht und
zum Startzeitpunkt des Druckbetriebs ein Winkel, der durch die erste Drehachse (O2) und die dritte Drehachse (O5) gebildet wird, kleiner ist als ein Winkel, der durch die erste Drehachse (O2) und die zweite Drehachse (01) gebildet wird.

## Revendications

1. Appareil d'impression d'objets tridimensionnels comprenant :
une tête d'éjection de liquide (310) comprenant une pluralité de buses (N), et configuré pour éjecter un liquide vers la pièce tridimensionnelle (W) ; et
un mécanisme de déplacement (200) configuré pour modifier une position relative de la tête d'éjection de liquide (310) par rapport à la pièce (W), dans lequel
le mécanisme de déplacement (200) inclut un nombre N d'articulations (230) rotatives autour de différents axes de rotation, N étant un nombre naturel de deux ou plus,
dans lequel l'appareil d'impression d'objets tridimensionnels comprend en outre un dispositif de commande (600) programmé pour exécuter une opération d'impression amenant la tête d'éjection de liquide (310) à éjecter un liquide tout en amenant le mécanisme de déplacement (200) à modifier la position relative de la tête d'éjection de liquide (310) par rapport à la pièce (W), le nombre d'articulations (230) effectuant une rotation pendant l'exécution de l'opération d'impression parmi le nombre N d'articulations est de M, lequel est un nombre naturel inférieur à N ;
dans lequel
le nombre N d'articulations inclut :
une première articulation (230_2) configurée pour effectuer une rotation autour d'un premier axe de rotation (O2),
une deuxième articulation (230_1) configurée pour effectuer une rotation autour d'un deuxième axe de rotation (O1), et
une troisième articulation (230_5) configurée pour effectuer une rotation autour d'un troisième axe de rotation (O5),
et, pendant l'exécution de l'opération d'impression, la première articulation (230_2) et la troisième articulation (230_5) effectuent une rotation et la deuxième articulation (230_1) n'effectue pas de rotation, et
un angle formé par le premier axe de rotation (O2) et le troisième axe de rotation (O5) est inférieur à un angle formé par le premier axe de rotation (O2) et le deuxième axe de rotation (O1) au début de l'opération d'impression.

2. Appareil d'impression d'objets tridimensionnels selon la revendication 1, dans lequel
le dispositif de commande (700) est en outre programmé pour exécuter une opération de non impression amenant le mécanisme de déplacement (200) à modifier la position relative de la tête d'éjection de liquide (310) par rapport à la pièce (W) et n'amenant pas la tête d'éjection de liquide (310) à éjecter un liquide, le nombre d'articulations (230) effectuant une rotation pendant l'exécution de l'opération de non impression parmi le nombre N d'articulations étant supérieur à M et égal ou inférieur à N.

3. Appareil d'impression d'objets tridimensionnels selon la revendication 1, dans lequel
le deuxième axe de rotation (O1) forme l'angle maximal avec le premier axe de rotation (O1) parmi des angles formés par le premier axe de rotation (O2) et des axes de rotation du nombre N d'articulations.

4. Appareil d'impression d'objets tridimensionnels selon la revendication 1, dans lequel
le premier axe de rotation (O2) est parallèle au troisième axe de rotation (O5).

5. Appareil d'impression d'objets tridimensionnels selon la revendication 1, dans lequel
le nombre N d'articulations inclut une quatrième articulation (230_3) configurée pour effectuer une rotation autour d'un quatrième axe de rotation (O3),
le premier axe de rotation (O2) est parallèle au troisième axe de rotation (O5) et au quatrième axe de rotation (O3) au début de l'opération d'impression, et
la première articulation (230_2), la troisième articulation (230_5), et la quatrième articulation (230_3) effectuent une rotation pendant l'exécution de l'opération d'impression.

6. Appareil d'impression d'objets tridimensionnels selon la revendication 1 ou la revendication 2, dans lequel
la tête d'éjection de liquide (310) inclut la pluralité de buses (N) disposées le long d'un axe de réseau de buses (b), et
le premier axe de rotation (O2) est parallèle à l'axe de réseau de buses (b) pendant l'exécution de l'opération d'impression.

7. Procédé d'impression d'objets tridimensionnels pour l'exécution d'une impression sur une pièce tridimensionnelle (W) à l'aide d'une tête d'éjection de liquide (310) comprenant une pluralité de buses (N) et éjectant un liquide sur la pièce (W) et d'un mécanisme de déplacement (200) modifiant une position relative de la tête d'éjection de liquide (310) par rapport à la pièce (W), dans lequel
le mécanisme de déplacement (200) inclut un nombre N d'articulations (230) rotatives autour de différents axes de rotation, N étant un nombre naturel de 2 ou plus, et
lors de l'exécution d'une opération d'impression amenant la tête d'éjection de liquide (310) à éjecter un liquide tout en amenant le mécanisme de déplacement (200) à modifier la position relative de la tête d'éjection de liquide (310) par rapport à la pièce (W), le nombre d'articulations (230) effectuant une rotation pendant l'exécution de l'opération d'impression parmi le nombre N d'articulations est de M, lequel est un nombre naturel inférieur à N ; et
dans lequel
le nombre N d'articulations inclut :
une première articulation (230_2) configurée pour effectuer une rotation autour d'un premier axe de rotation (O2),
une deuxième articulation (230_1) configurée pour effectuer une rotation autour d'un deuxième axe de rotation (O1), et
une troisième articulation (230_5) configurée pour effectuer une rotation autour d'un troisième axe de rotation (O5),
et, pendant l'exécution de l'opération d'impression, la première articulation (230_2) et la troisième articulation (230_5) effectuent une rotation et la deuxième articulation (230_1) n'effectue pas de rotation, et
un angle formé par le premier axe de rotation (O2) et le troisième axe de rotation (O5) est inférieur à un angle formé par le premier axe de rotation (O2) et le deuxième axe de rotation (01) au début de l'opération d'impression.
